Europäisches Patentamt

European Patent Office

Office européen des brevets

(11) Veröffentlichungsnummer: **0 456 977 A2**

## EUROPÄISCHE PATENTANMELDUNG

(21) Anmeldenummer: 91103528.5

(22) Anmeldetag: 08.03.91

(51) Int. Cl.5: **G01N 21/81**

(30) Priorität: 16.03.90 DE 4008486

(43) Veröffentlichungstag der Anmeldung:
21.11.91 Patentblatt 91/47

(84) Benannte Vertragsstaaten:
CH DE FR GB IT LI

(71) Anmelder: BELLINO GMBH & CO.
Fabrikstrasse 1

W-7320 Göppingen(DE)

(72) Erfinder: **Birkle, Gebhard**
**Inselgasse 16**
**W-7750 Konstanz(DE)**

(74) Vertreter: **Mierswa, Klaus, Dipl.-Ing.**
**Friedrichstrasse 171**
**W-6800 Mannheim 24(DE)**

(54) **Feuchtigkeitssensor für Kältemittel.**

(57) Die Erfindung betrifft einen Feuchtigkeitssensor zum Ermitteln eines geringfügigen Wassergehaltes, vorzugsweise im ppm-Bereich, in einem Kältemittel, mit einem innerhalb des Volumenstromes des Kältemittels angeordneten Indikator, der bei Vorhandensein von Wasser eine feuchteabhängige Farbänderung zeigt. Der Indikator (5) ist innerhalb einer Halterung dergestalt angeordnet, daß das Kältemittel den Indikator (5) fortlaufend zu benetzen imstande ist, wobei der Indikator (5) mittels eines Lichtstrahls aus einem Lichtsender (7,20,27) beleuchtet und der vom Indikator (5) reflektierte Lichtstrahl von einem Lichtempfänger (8,21,28) aufgefangen und in ein elektrisches Signal umgewandelt wird, welches einer Anzeige bzw. Auswertung zuführbar ist. Bevorzugt ist der Indikator (5) innerhalb einer zum Volumenstrom des Kältemittels offenen Aufnahmekammer (3) angeordnet, die rückseitig mittels eines optisch transparenten Fensters (6,12,26) aus Glas oder Kunststoff dicht verschlossen ist, hinter dem der Lichtsender (7,20,27) und der Lichtempfänger (8,21,28) angeordnet sind, wobei der Lichtsender (7,20,27) durch das Fenster (6,12,26) Licht sendet, das vom Indikator durch das Fenster reflektiert, vom Lichtempfänger (8,21,28) aufgefangen und in ein elektrisches Signal zur Anzeige bzw. Auswertung umwandelbar ist.

Fig.1

Technisches Gebiet:

Die Erfindung betrifft einen Feuchtigkeitssensor zum Ermitteln eines geringfügigen Wassergehaltes, vorzugsweise im ppm-Bereich, in einem Kältemittel, insbesondere innerhalb eines Kältekreislaufes in einer Klimaanlage für Kraftfahrzeuge, gemäß dem Oberbegriff des Anspruchs 1.

Stand der Technik:

Kältemittelkreisläufe mit Fluorkohlenwasserstoffen dürfen nur einen bestimmten geringfügigen Wassergehalt, den sogenannten kritischen Wassergehalt, aufweisen, der im ppm-Bereich liegen kann. Ein darüber hinausgehender Wassergehalt führt zu starker Beeinträchtigung des Kältekreislaufes und u.U. zur Zerstörung der Kältemaschine. Deshalb ist es wesentlich, diesen geringfügigen Wassergehalt innerhalb eines Kältemittels in einem Kältekreislauf zu überwachen, was bisher optisch mittels sogenannter Indikatorsubstanzen für Wasser geschieht. Es ist bekannt, daß Kobaltbromid (CoBr 2) oder Kobalt(II)-Chlorid (CoCl 2) geeignete Indikatorsubstanzen sind, um die Anwesenheit von Wasser in einem Kältemittel der Fluorkohlenwasserstoffe, wie beispielsweise Frigen R12, anzuzeigen. Bei Anwesenheit von Wasser im Kältemittel zeigen die genannten Indikatorsubstanzen eine Farbveränderung, die auf einer stufenweisen Hydratwasseranlagerung beruht, mit der eine stufenweise Farbänderung an den Metallsalzen einhergeht. Dabei ist es bekannt, Farbindikatoren, die das Kobaltbromid auf einem geeigneten Substrat in Tablettenform enthalten, im Kühlkreislauf zu positionieren, wobei der Indikator durch ein Schauglas von einer Überwachungsperson inspiziert werden kann. Zwischen der Hydratwasseranlagerung und den Farberscheinungen besteht folgender Zusammenhang:

CoBr 2 = grün
CoBr 2 x 1 H2o = blau
CoBr 2 x 2 H2o = purpur
CoBr 2 x 6 H2o = pink.

Eine derartige Überwachungsmethode kann bestenfalls für große Kältemittelanlagen geeignet sein, sie ist jedoch ungeeignet zum Einsatz in Kältekreisläufen, beispielsweise einer Klimaanlage für Kraftfahrzeuge oder von Kühlschränken. Denn das Vorhandensein von Wasser innerhalb eines Kältekreislaufes kann beispielsweise auf ein Leck innerhalb desselben auf Diffusionsprozesse, auf Entmischungen oder auf Abspaltungen von Wasser hindeuten, was Maßnahmen erfordert, um zum Beispiel das Kältemittel nicht in die Atmosphäre entweichen zu lassen oder das Wasser zu entfernen. Aus der GB 21 29 128 A ist ein Feuchtigkeitsdetektor bekannt geworden, der z.B. Kobaltchlorid enthält und der eine Photodiode aufweist, deren Licht vom Kobaltchlorid reflektiert und auf einen Phototransistor geleitet wird, wobei ein Blaulichtfilter im Lichtweg der Photodiode angeordnet sein kann, um die Farbänderung des reflektierten Lichts genauer darzustellen.

Durch die CH 666 752 A5 ist ein Meßgerät zur Bestimmung der relativen Feuchte bekanntgeworden, bestehend aus einer Lichtquelle, einem Träger, der feuchteempfindliche Salze enthält und einem photoelektrischen Element, um die Emmissions- und Absoptionsspektren derart aufeinander abzustimmen, daß die Maxima bzw. das absolute Maximum im Spektralbereich des Trägers in dem Bereich von 400 bis 900 nm und höchstens 200 nm voneinander entfernt liegen. Lichtquelle, photoelektrisches Element und Träger befinden sich in einem Gehäuse, der eine wasserdampfdurchlässige Folie mit darin gelösten feuchteempfindlichen Salzen ist, die lichtdicht innerhalb des Gehäuses angeordnet ist. Ein Teil der Folie steht über Schlitze im Gehäuse mit der Außenluft in Verbindung, so daß über die Kapillarwirkung Wassermoleküle aus der Außenluft zu den Salzen gelangen können und dort einen feuchteabhängigen Farbumschlag auszulüsen imstande sind. Für einen Einsatz in einem Kühlkreislauf ist das Meßgerät nicht geeignet.

Technische Aufgabe:

Der Erfindung liegt die Aufgabe zugrunde, einen Feuchtigkeitssensor der genannten Gattung zu schaffen, mit dem selbsttätig ein geringfügiger Wassergehalt in einem Kältemittel, insbesondere eines Kältemittelkreislaufes, sowohl quantitativ als auch qualitativ ermittelt werden soll, um daraus ein elektrisches Signal zu gewinnen, mit dem zum Beispiel eine Alarm- oder Sicherheitsschaltung angesteuert und/oder eingeschaltet werden kann. Des weiteren liegt der Erfindung die Aufgabe zugrunde, einen Feuchtigkeitssensor zu schaffen, mit dem bestehende Kältemittelkreisläufe nachgerüstet werden können.

Darstellung der Erfindung und deren Vorteile:

Die Lösung dieser Aufgabe besteht erfindungsgemäß darin, daß der Indikator innerhalb einer Halterung dergestalt angeordnet ist, daß das Kältemittel den Indikator fortlaufend zu benetzen imstande ist, wobei der Indikator mittels eines Lichtstrahls aus einem Lichtsender beleuchtet und der vom Indikator reflektierte Lichtstrahl von einem Lichtempfänger aufgefangen und in ein elektrisches Signal umgewandelt wird, welches einer Anzeige bzw. Auswertung zuführbar ist.

In einer bevorzugten Ausgestaltung kann der Indikator innerhalb einer zum Volumenstrom des Kältemittels offenen Aufnahmekammer angeordnet sein, so daß das Kältemittel den Indikator zu benetzen imstande ist; die Aufnahmekammer ist rückseitig mittels eines optisch transparenten Glasfensters dicht verschlossen, hinter dem der Lichtsender und der Lichtempfänger angeordnet sind, wobei der Lichtsender durch das Glasfenster Licht sendet, das vom Indikator durch das Glasfenster reflektiert, vom Lichtempfänger aufgefangen und in ein elektrisches Signal zur Anzeige bzw. Auswertung umwandelbar ist. Weitere vorteilhafte Ausgestaltungen der Erfindung sind in den Unteransprüchen gekennzeichnet.

Der erfindungsgemäße Feuchtigkeitssensor besitzt den hervorstechenden Vorteil, daß mit demselben eine selbsttätige Überwachung eines geringfügigen Wassergehaltes, der beispielsweise im ppm-Bereich liegen kann, in einem Kältemittel, wie Fluorkohlewasserstoffe oder analoge Kältemittel, durchgeführt werden kann, wobei aufgrund des feuchteabhängigen Farbumschlags des Indikators sowohl eine qualitative, als auch quantitative Aussage über den Wassergehalt möglich ist. Erfindungsgemäß wird ab einer höchst geringen Schwelle von Anwesenheit von Wasser im Kältemittel durch den vom fabändernden Indikator reflektierten Lichtstrahl ein elektrisches Signal erzeugt, welches dazu benützt werden kann, um beispielsweise einen Alarm auszulösen oder eine Sicherheitseinrichtung einzuschalten oder auch den Kältekreislauf abzuschalten.

In erfinderischer Weise können der Lichtsender und/oder der Lichtempfänger sowohl außerhalb, als auch innerhalb des Volumenstromes des Kältemittels angeordnet sein; vorzugsweise sind Lichtsender und/oder Lichtempfänger außerhalb des Volumenstromes des Kältemittels angeordnet. Bei speziellen Anforderungen sind aber auch die Anordnung des Lichtsenders und/oder des Lichtempfängers innerhalb des Volumenstromes des Kältemittels in einer nach außen völlig abgeschirmten Weise möglich, wobei z.B. nur elektrische Anschlüsse nach außerhalb des Kältemittels bzw. des Kreislaufes geführt sind.

Das erzeugte elektrische Signal kann dem Farbumschlag des Indikators bzw. dem Wassergehalt innerhalb des Kältemittels proportional sein oder gemäß einer vorgebbaren Kennlinie sich verhalten, die vorzugsweise nichtproportional ist, womit eine qualitative und quantitative Aussage über den Wassergehalt verbunden ist.

Bei nur quantitativer Bestimmung des Wassergehaltes innerhalb des Kältemittels bzw. des Kältemittelkreislaufes kann es vorteilhaft sein, statt einer Kennlinie einen Binäreffekt als Hell-Dunkel-Signal zu erzeugen und auszunützen, was durch eine optische Filterung des reflektierten bzw. schon des ausgesendeten Lichtstrahls mittels Filter erzielt werden kann und wodurch die elektrische Auswerteschaltung noch einfacher aufgebaut sein kann.

Aufgrund der Verwendung eines Lichtsenders und eines Lichtempfängers für die Ermittlung der Farbänderung bzw. des Farbumschlags des Indikators arbeitet der Feuchtigkeitssensor fehlerfrei; Ablesefehler einer Bedienungsperson hinsichtlich der angezeigten Farbe aufgrund ungenügender oder einseitiger Beleuchtung, wie beim Stand der Technik möglich, sind bei der erfindungsgemäßen optisch-elektronischen Farbauswertung ausgeschlossen.

Des weiteren kann der erfindungsgemäße Feuchtigkeitssensor, höchst vorteilhaft in einer kleinen Patrone als Gehäuse untergebracht werden, die sämtliche Bauelemente beinhaltet und deren ein Ende den Indikator enthält, wobei in Funktion die Patrone mit dem den Indikator enthaltenden Ende offen in den Volumenstrom des Kältemittels eintaucht. Dadurch ist es vorteilhafterweise möglich, bestehende Kältemittelanlagen mit dem erfindungsgemäßen Feuchtigkeitssensor nachzurüsten, indem im Gehäuse des Kältemittelkreislaufes oder in einer Rohrleitung eine Bohrung, vorzugsweise Gewindebohrung, vorgesehen werden kann, in die die Patrone des Feuchtigkeitssensors eingeschraubt wird dergestalt, daß der Indikator in den Volumenstrom des Kältemittels eintaucht und vom Kältemittel benetzt wird. Dadurch findet keine Beeinträchtigung des Volumenstromes des Kältemittels statt.

In vorteilhafter Weise wird als Indikator als Granulat vorliegendes oder gekörntes oder in feinen Kügelchen vorliegendes Kobaltbromid oder Kobalt-(II)-Chlorid verwendet, welches mittels eines feinen Siebes oder Netzes zurückgehalten wird und baulich mit dem Feuchtigkeitssensor eine Einheit bildet, wobei die Poren des Siebes feiner sind als der Durchmesser der Kügelchen oder des Granulates.

Kurzbeschreibung der Zeichnung, in welcher darstellen:

| | |
|---|---|
| Figur 1 | einen Längsschnitt durch einen Feuchtigkeitssensor mit optisch-elektronischer Farbauswertung, die einen vergrößerten Ausschnitt der Figur 3 darstellt |
| Figur 2 | eine spezifische Gestaltung des Fensters in Form eines transparenten Körpers zum Abschluß der den Indikator aufnehmenden Aufnahmekammer, wobei der Körper integriert angeformte Linsenflächen aufweist |
| Figur 3 | eine Gesamtdarstellung von Figur 1 |
| Figur 4 | eine technische Ausführung eines Feuchtigkeitssensors in Form einer Patrone, die insbesondere zum |

Nachrüsten bestehender Kältekreisläufe geeignet ist und

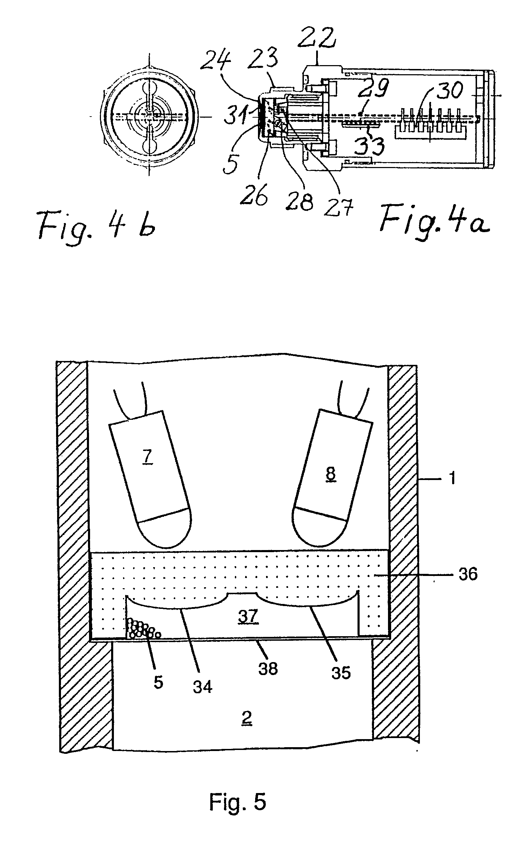

Figur 5 ein weiterer transparenter Körper als Fenster, in den Linsen eingeformt sind, die eine Aufnahmekammer für den Indikator ergeben, die mittels eines flachen Siebes abgedeckt ist.

In den Figuren sind gleiche Teile mit gleichen Bezugszeichen gekennzeichnet.

Wege zur Ausführung der Erfindung:

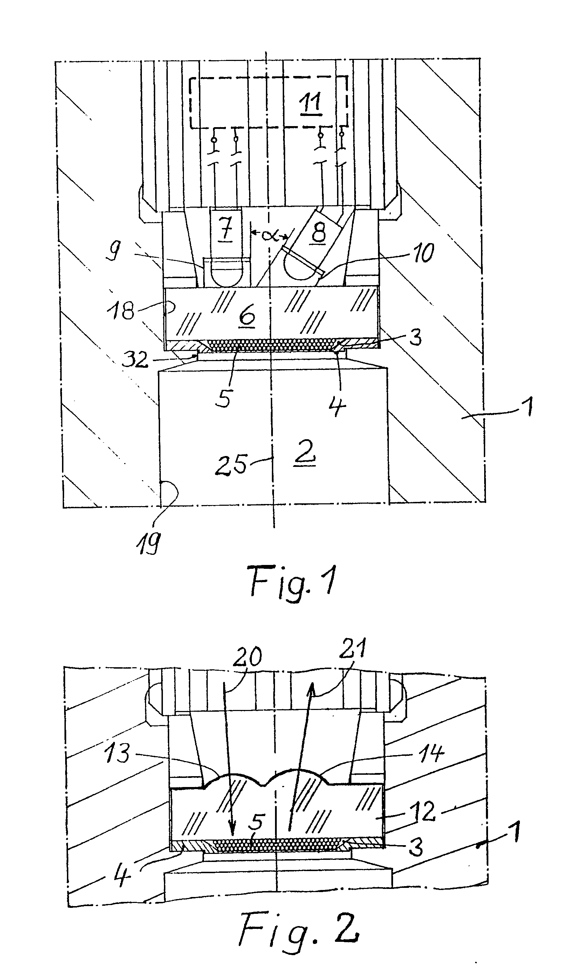

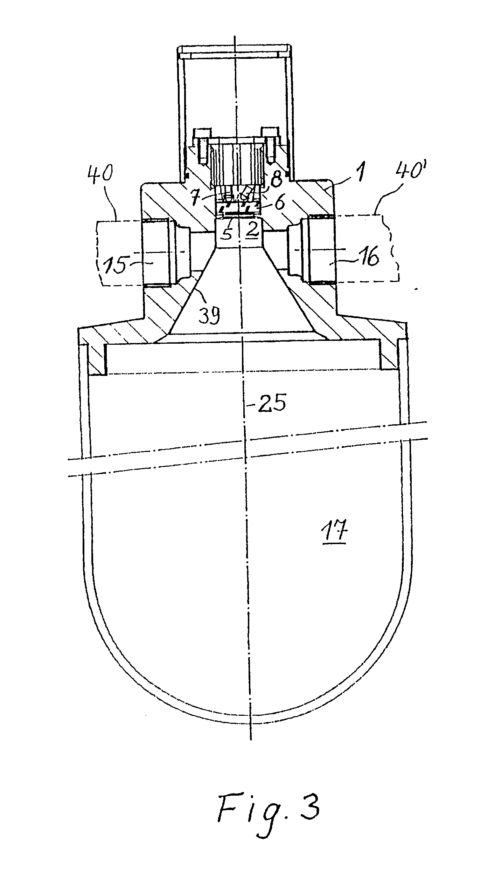

Gemäß den Figuren 1 und 3 besteht ein Beispiel eines Feuchtigkeitssensors zum Ermitteln eines geringfügigen Wassergehaltes in einem Kältemittel beispielsweise aus einem Trägerblock 1, der rotationssymmetrisch zur Mittelachse 25 gestaltet sein und in welchen, von der Zeichenebene aus gesehen von oben, eine Bohrung 18 und von unten eine Bohrung 19 unter Belassung eines verjüngten umlaufenden Flansches 32 angeordnet sind, der die Bohrungen 18, 19 voneinander trennt. Innerhalb der Bohrung 18 ist auf den Flansch 32 ein Sieb 4 aufgesetzt, welches zum Beispiel topfartig geformt sein kann und eine Aufnahmekammer 3 umschließt, in welcher ein Indikator 5 in Form von Kügelchen oder Granulat angeordnet ist. Auf das Sieb 4 ist ein optisch transparenter Körper 6 aus Glas oder Kunststoff in Form eines scheibenförmigen Fensters aufgelegt dergestalt, daß die Aufnahmekammer mittels des Körpers 6 dicht verschlossen ist. Das Kältemittel kann durch das Sieb 4 hindurchtreten und den Indikator 5 innerhalb der Aufnahmekammer 3 benetzen, was beispielsweise fortlaufend oder intermittierend der Fall sein kann.

Oberhalb des Fensters 6 auf der dem Indikator abgewandten Seite befindet sich eine Sendediode 7 als Lichtsender zum Aussenden eines Lichtstrahls und eine Empfängerdiode 8 als Lichtempfänger zum Empfangen des vom Indikator reflektierten Lichtstrahls. Die Sende- und Empfängerdiode 7, 8, die jeweils auf einen Diodenhalter 9, 10 montiert sein können, sind unter einem Winkel α, vorzugsweise zwischen 0 und 90 Grad, zueinandergeneigt. Als Sendediode kann in vorteilhafter Weise eine Diode verwendet werden, die im sichtbaren Licht arbeitet, wobei die Empfängerdiode 8 auf die Sendediode 7 abgestimmt ist. In vorteilhafter Weise können als Sende-Empfängerdioden im Hinblick auf die für den Feuchtigkeitssensor vorgegebenen tiefen Betriebstemperaturen Infrarotlicht-Dioden zur Anwendung gelangen oder solche, die im nahen Infrarotlicht arbeiten. Die Sende- und Empfängerdioden 7, 8 sind an ein Bauelement 11 zur Signalverarbeitung angeschlossen, welches zur Ansteuerung der Dioden und zur Signalauswertung und Signalweiterverarbeitung dient.

Durch die untere Bohrung 19 ist innerhalb des Trägerblockes 1 ein Raum 2 ausgebildet, in welchem das Kältemittel zirkulieren und von dem es durch das Sieb 4 in die Aufnahmekammer 3 hindurchtreten kann.

In Figur 2 ist eine weitere Ausgestaltung eines transparenten Körpers 12 aus Glas oder Kunststoff als Fenster zum Abschluß der den Indikator 5 aufweisenden Aufnahmekammer 3 dargestellt. Der Körper 12 besitzt, vorzugsweise auf der dem Indikator abgewandten Seite, zwei Linsen 13, 14, die integriert einstückig mit dem Körper 12 ausgebildet sind. Die Linse 13 dient zur Fokussierung bzw. Streuung des einfallenden Lichtes, welches durch den Pfeil 20 dargestellt ist, aus einem Lichtsender; die Linse 14 dient zur Fokussierung bzw. Streuung des vom Indikator durch den Körper 12 reflektierten Lichts, welches durch den Pfeil 21 dargestellt ist, auf einen nichtgezeigten Lichtempfänger.

Gemäß der Figur 3 können in diesen Raum 2 (Figur 1) beispielsweise je eine Zu- und Ablauföffnung 15, 16 für das zirkulierende Kältemittel münden, an die Rohrleitungen 40, 40' angeschlossen sind. Die Bohrung 19 kann sich nach unten in geeigneter Weise in Form eines Trichters 39 erweitern, wobei der Trägerblock 1 auf einen Behälter 17 für das Kältemittel aufgesetzt sein kann.

In den Figuren 4a und 4b ist eine vorteilhafte technische Ausgestaltung eines Feuchtigkeitssensors in Form einer Patrone 22 als Gehäuse dargestellt, die insbesondere eine miniaturisierte Ausführungsform für die Nachrüstung bestehender Kältekreisläufe mit dem Gegenstand der Erfindung darstellt.

An der vorzugsweise zylindrisch ausgestalteten Patrone 22 ist an einem Ende zentrisch ein rohrförmiges Ansatzstück 23 angeformt, welches an seinem Ende ein Sieb 24 aufweist, welches eine Aufnahmekammer 31 umschließt, die nach innen innerhalb des Ansatzstückes 23 durch ein optisch transparentes Fenster 26 dicht verschlossen ist. Innerhalb der Aufnahmekammer 31 zwischen dem Sieb 24 und dem Fenster 26 ist der Indikator 5 in Form von Kügelchen oder als Granulat angeordnet, wobei die Poren des Siebes kleiner sind als der Durchmesser der Kügelchen bzw. des Granulates. Auf das Fenster 26 folgen auf der dem Indikator abgewandten Seite ein Lichtsender und ein Lichtempfänger, die Dioden 27,28 sein können, und die mit elektrischen Bauelementen 30, 33 zur Signalverarbeitung in elektrischer Verbindung stehen. Die elektrischen Bauelemente 30,33 sind auf einer Leiterplatte 29 angeordnet, die innerhalb der Patrone 22 sich befindet. Die Leiterplatte kann bis in das Ansatzstück 23 der Patrone 22 ragen, so daß die Sende- und Empfängerdiode 27, 28 auf dem vorderen Teil der Leiterplatte 29 oberhalb des Fensters 26 gehaltert sein können.

Das Ansatzstück 23 kann ein Außengewinde aufweisen, mit welchem die Patrone 22 in eine Gewindebohrung innerhalb eines Gehäuses oder einer Rohrleitung eines Kühlkreislaufes eingeschraubt werden kann.

Die Arbeitsweise der gezeigten Vorrichtung ist folgende:

Innerhalb des Raumes 2 durch die Zu- und Ablauföffnungen 15,16 (Figur 3) hindurch zirkuliert ein Kältemittel, vorzugsweise innerhalb eines Kältekreislaufs. Dieses Kältemittel tritt durch die Poren des Siebes 4 hindurch und benetzt den Indikator 5. Da dieser in Form von Kügelchen oder Stäbchen oder als Granulat fein verteilt vorliegt, besitzt der Indikator für das Kältemittel eine große wirksame Oberfläche. Die Sendediode 7 sendet Licht aus, welches das Fenster 6 durchquert, auf den Indikator 5 fällt und von diesem durch das Fenster 6 reflektiert wird und auf die Empfängerdiode 8 gelangt. Das Ausgangssignal der Empfängerdiode 8 wird auf das elektrische Bauelement 11 zur Signalverarbeitung und Signalauswertung gegeben. Zeigt der Indikator 5 eine Farbänderung, weil sich Wasser im Kältemittel befindet, so ändert sich das Spektrum des reflektierten Lichtes, wodurch das Ausgangssignal der Empfängerdiode 8 eine Änderung zeigt, die innerhalb des Bauelementes 11 ausgewertet werden kann. Dadurch kann ein Signal erzeugt werden, das zur Alarmgabe oder zur Auslösung einer Sicherheitseinrichtung dient.

Gemäß der Figur 5 können Linsen 34, 35 - ähnlich den in Figur 2 beschriebenen Linsen 13, 14 innerhalb des Körpers 12 - in einen transparenten Körper 36 aus Glas oder Kunststoff integral eingeformt und auf der dem Indikator zugewandten Seite des Glaskörpers 36 angeordnet sein. Die Ausgestaltung der Linsen 34, 35 ist vertieft innerhalb des Körpers angeordnet, so daß eine Aufnahmekammer 37 in Form einer Vertiefung innerhalb des Körpers 36 für den Indikator 5 gebildet ist, wobei die Aufnahmekammer mittels eines flächigen Siebes 38 oder Netzes zur Halterung des Indikators 5 agedeckt ist. Die übrigen Teile sind gemäß den Teilen in der Beschreibung zu Figur 1 benannt. Die transparenten Körper 12 und 36 können aus Pressglas oder aus formgepresstem Kunststoff bestehen.

Gewerbliche Anwendbarkeit:

Der erfindungsgemäße Feuchtigkeitssensor ist insbesondere zum Ermitteln und zur Überwachung eines geringfügigen Wassergehaltes, vorzugsweise im ppm-Bereich, in einem Kältemittel innerhalb eines Kältekreislaufes geeignet, beispielsweise innerhalb einer Klimaanlage oder einem Kühlaggregat. Insbesondere kann der erfindungsgemäße Feuchtigkeitssensor vorteilhaft die Form einer Patrone aufweisen, um in das Gehäuse oder eine Rohrleitung von bestehenden Kältekreisläufen nachgerüstet zu werden.

Liste der Bezugszeichen:

| | |
|---|---|
| 1 | Trägerblock |
| 2 | Aufnahmeraum für das Kältemittel |
| 3 | Aufnahmekammer |
| 4 | Sieb |
| 5 | Indikator |
| 6 | transparenter Körper aus Glas oder Kunststoff |
| 7 | Sendediode |
| 8 | Empfangsdiode |
| 9,10 | Diodenhalter |
| 11 | elektrisches Bauelement zur Signalverarbeitung |
| 12 | transparenter Körper aus Glas oder Kunststoff |
| 13,14 | Linsen |
| 15,16 | Zu- und Ablauföffnungen |
| 17 | Behälter |
| 18,19 | Bohrungen |
| 20 | einfallendes Licht |
| 21 | reflektiertes Licht |
| 22 | Feuchtigkeitssensor in Form einer Patrone |
| 23 | Ansatzstück |
| 24 | Sieb |
| 25 | Mittelachse |
| 26 | Glas |
| 27,28 | Sende- und Empfängerdiode |
| 29 | Leiterplatte |
| 30, 33 | elektrische Bauelemene zur Signalverarbeitung |
| 31 | Aufnahmekammer |
| 32 | Flansch |
| 34, 35 | Linsen |
| 36 | transparenter Körper aus Glas oder Kunststoff |
| 37 | Aufnahmekammer |
| 38 | flächiges Sieb oder Netz |
| 39 | Trichter |
| 40, 40' | Rohrleitungen |

**Patentansprüche**

1. Feuchtigkeitssensor zum Ermitteln eines geringfügigen Wassergehaltes, vorzugsweise im ppm-Bereich, in einem Kältemittel, insbesondere innerhalb eines Kältekreislaufes in einer Klimaanlage für Kraftfahizeuge, mit einem innerhalb des Volumenstromes des Kältemittels angeordneten Indikator, der bei Vorhandensein von Wasser eine feuchteabhängige Farbänderung zeigt, dadurch gekennzeichnet,

daß der Indikator (5) innerhalb einer Halterung dergestalt angeordnet ist, daß das Kältemittel den Indikator (5) fortlaufend zu benetzen imstande ist, wobei der Indikator (5) mittels eines Lichtstrahls aus einem Lichtsender (7,20,27) beleuchtet und der vom Indikator (5) reflektierte Lichtstrahl von einem Lichtempfänger (8,21,28) aufgefangen und in ein elektrisches Signal umgewandelt wird, welches einer Anzeige bzw. Auswertung zuführbar ist.

2. Feuchtigkeitssensor nach Anspruch 1, dadurch gekennzeichnet,
daß der Indikator (5) innerhalb einer zum Volumenstrom des Kältemittels offenen Aufnahmekammer (3) angeordnet ist, so daß das Kältemittel den Indikator zu benetzen imstande ist, die Aufnahmekammer rückseitig mittels eines optisch transparenten Fensters (6,12,26) aus Glas oder Kunststoff dicht verschlossen ist, hinter dem der Lichtsender (7,20,27) und der Lichtempfänger (8,21,28) angeordnet sind, wobei der Lichtsender (7,20,27) durch das Fenster (6,12,26) Licht sendet, das vom Indikator durch das Fenster reflektiert, vom Lichtempfänger (8,21,28) aufgefangen und in ein elektrisches Signal zur Anzeige bzw. Auswertung umwandelbar ist.

3. Feuchtigkeitssensor nach Anspruch 1 oder 2, dadurch gekennzeichnet,
daß der Lichtsender und/oder der Lichtempfänger außer- oder innerhalb des Volumenstromes des Kältemittels angeordnet sind.

4. Feuchtigkeitssensor nach Anspruch 1 oder 2, dadurch gekennzeichnet,
daß der Indikator (5) als Granulat, vorzugsweise in Form von Kügelchen, fein verteilt vorliegt und die Halterung bzw. Aufnahmekammer (3,13) zum Volumenstrom des Kältemittels hin mit einem das Granulat bzw. die Indikator-Kügelchen (5) zurückhaltendes Sieb (4,24) für den Durchtritt des Kältemittels zur Halterung bzw. in die Aufnahmekammer (3,31) begrenzt ist.

5. Feuchtigkeitssensor nach Anspruch 2 oder 3, dadurch gekennzeichnet,
daß der Lichtempfänger eine lichtempfindliche Diode (8,28) ist, wobei die Sendediode (7,27), die vorzugsweise eine Infrarot-Diode ist, auf die Empfängerdiode (8,28) abgestimmt ist.

6. Feuchtigkeitssensor nach Anspruch 2 oder 5, dadurch gekennzeichnet,
daß die Sende- und Empfängerdiode (7,8,27,28) unter einen Winkel ($\alpha$) zueinander geneigt sind, der größer Null und kleiner 90 Grad beträgt.

7. Feuchtigkeitssensor nach Anspruch 2, dadurch gekennzeichnet,
daß der optisch transparente Körper aus Glas oder Kunststoff (12) zur Bildung des Fensters auf der der Aufnahmekammer (3) abgewandten Oberfläche Ausformungen (13,14) mit Linsenwirkung aufweist, die das einfallende bzw. reflektierte Licht (20,21) zu fokussieren oder zu streuen imstande sind.

8. Feuchtigkeitssensor nach Anspruch 2, dadurch gekennzeichnet,
daß die Aufnahmekammer (3) innerhalb eines Trägerblockes (1) ausgebildet ist, der eine Bohrung (18) aufweist, in die das Sieb (4), der optisch transparente Körper (6) und der Lichtsender (7) und der Lichtempfänger (8) eingesetzt sind, wobei innerhalb des Trägerblockes (1) in entgegengesetzter Richtung eine weitere Bohrung (19) angeordnet ist, die nach oben durch das Sieb (4) begrenzt ist und die den Raum (2) für das Kältemittel bildet und in die quer eine Zu- und eine Ablauföffnung (15,16) für das Kältemittel münden, wobei das Sieb (4) und der Körper (6) die Aufnahmekammer begrenzen.

9. Feuchtigkeitssensor nach Anspruch 8, dadurch gekennzeichnet,
daß das Sieb (4) topfartig zur Aufnahme und Halterung des Indikators (5) ausgebildet ist.

10. Feuchtigkeitssensor nach den Ansprüchen 1 oder 2, dadurch gekennzeichnet,
daß derselbe ein Gehäuse besitzt, welches die Form einer Patrone (22) aufweist, an deren einem Ende die nach außen mittels des Siebes (24) abgegrenzte Aufnahmekammer (31) mit dem darin befindlichen Indikator (5) angeordnet ist, wobei die Patrone (22) mit dem die Aufnahmekammer (31) aufweisenden Ende in den Volumenstrom des Kältemittels einsetzbar ist.

11. Feuchtigkeitssensor nach Anspruch 10, dadurch gekennzeichnet,
daß die Patrone (22) an einem Ende einen im Durchmesser verjüngten Ansatz (23) aufweist, der die Aufnahmekammer (31), den Indikator (5), das optisch transparente Fenster (26), den Lichtsender (27) und Lichtempfänger (28) beherbergt, wobei der Ansatz (23) der Patrone (22) mit dem Indikator (5) offen in den Volumenstrom des Kältemittels einzutauchen imstande ist.

12. Feuchtigkeitssensor nach Anspruch 1 oder 2, dadurch gekennzeichnet, daß in den optisch transparenten Körper (36) aus Glas oder Kunststoff auf der dem Indikator (5) zugewandten Seite Linsen (34,35) vertieft eingeformt sind, so daß bezüglich der Oberfläche des Körpers eine Aufnahmekammer (37) für den Indikator ausgebildet ist, die mittels eines flächigen Siebes (38) abgedeckt ist.

13. Feuchtigkeitssensor nach Anspruch 1 oder 2, dadurch gekennzeichnet, daß das durch den reflektierten Lichtstrahl erzeugte elektrische Signal farbproportional ist bzw. gemäß einer vorgebbaren Kennlinie verläuft bzw. ein Binärsignal (Hell-Dunkel-Signal) ist.

14. Feuchtigkeitssensor nach Anspruch 1 oder 2, dadurch gekennzeichnet, daß der Indikator (5) Kobaltbromid (CoBr2) oder Kobalt (II)-Chlorid (CoCl2) ist.

Fig. 1

Fig. 2

Fig. 3

Fig. 4 b

Fig. 4a

Fig. 5